# EUROPÄISCHE PATENTANMELDUNG

(11) **EP 1 044 869 A2**
(43) Veröffentlichungstag der Anmeldung: **18.10.2000**
(21) Anmeldenummer: 00107432.7
(22) Anmeldetag: 06.04.2000
(51) Int. Cl.: B62D 33/03, B62D 33/08

(54) **Ladeplattform eines Transportfahrzeugs**

(30) Priorität: 15.04.1999 US 292419
(71) Anmelder: DEERE & COMPANY, Moline, Illinois 61265-8098 (US)
(72) Erfinder: Shambeau, Thomas Allen, Beaver Dam, WI 53916 (US); Hansen, Loren Fredrick, Lincoln, NE 68505 (US)
(74) Vertreter: Magin, Ludwig Bernhard

(57) **Zusammenfassung**

Eine Ladeplattform (18) eines Transportfahrzeugs (10) ist mit einer beweglichen Wand (26) versehen, die zusammen mit anderen Wänden (22, 24) sowohl in eine die Ladeplattform (18) schließende als auch in eine diese zu einer Fläche verwandelnde Stellung bringbar ist. Wenn die bewegliche Wand (26) in eine waagrechte Stellung geschwenkt wird, in der sie eine Ebene mit einem Boden (20) der Ladeplattform (18) bildet, wird sie von einem Stützmechanismus (60) getragen, der mit einem Verriegelungshaken (70) versehen werden kann, der den Stützmechanismus (60) mit der Wand (26) formschlüssig verbindet.

## Beschreibung

Die Erfindung betrifft eine Ladeplattform eines Transportfahrzeugs mit einem Boden, wenigstens einer schwenkbaren Wand und einem Stützmechanismus zum Halten der schwenkbaren Wand in einer ausgeklappten Stellung.

Die US-A-4,348,045 offenbart eine Ladeplattform eines LKW mit einer Seitenwand, die in einem Bereich von 180 Grad schwenkbar an einem Boden der Ladeplattform angebracht ist. Es ist ein federbelasteter Hebelmechanismus vorgesehen, der einerseits an der Seitenwand und andererseits an dem Boden oder einem Rahmen, der den Boden trägt, angeschlossen ist. Dieser Hebelmechanismus nimmt einen Teil des Gewichts der Wand auf und unterstützt eine Bedienungsperson beim Öffnen und Schließen der Ladeplattform. Allerdings ist diese bekannte Vorrichtung nicht geeignet, die Wand in einer im wesentlichen horizontalen Stellung zu halten.

Aus dem Prospekt 3.0 PS MCG90 von YANMAR geht ein Raupenfahrzeug mit einer umbaubaren Ladepritsche hervor, die drei vertikal schwenkbare Wände enthält. Die Wände können in einer waagrechten und mit einem zwischen ihnen befindlichen Boden sich deckenden Stellung gehalten werden, um eine große flache Ladeplattform zu bilden. Hierzu sind die Wände mit einer Wange mit einem vierkantigen Profilfuß versehen, der in ein vierkantiges Rohr einsetzbar ist und dort drehfest gehalten wird. Um die Wand aus einer Stellung in eine andere zu bringen, muß zunächst der Formschluß zwischen dem Profilfuß und dem Rohr gelöst werden, wozu die Wand längs verschoben wird, die Wand z. B. um 90 Grad verstellt und anschließend der Formschluß wieder hergestellt werden. Die Beaufschlagung der Formschlußverbindung mit Schmutz und Wasser kann zu Korrosion führen, die es schwer macht, die Formschlußverbindung zu lösen. Außerdem ist es zeitaufwendig und bedarf einer starken Bedienungsperson, um eine größere Wand zu verstellen.

Die US-A-5,280,986 zeigt eine Ladeplattform mit einer rückwärtigen vertikal schwenkbaren Wand, die an jeder Seite mittels jeweils einer Strebe an einer seitlichen Wand gehalten wird. Diese Art, eine Wand gegen eine Abwärtsbewegung abzustützen, setzt jedoch voraus, daß z. B. seitliche Wände vorhanden sind, die an einer Stelle enden, die oberhalb der ausgeklappten beweglichen Wand liegt.

Das der Erfindung zugrunde liegende Problem wird darin gesehen, eine Ladeplattform so auszubilden, daß sie einfach und schnell in eine ebene Ladefläche umgewandelt werden kann.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise ist der Stützmechanismus nicht Teil der Wand, sondern ein eigenständiger Teil, der einfach ausgebildet werden kann und auch bei einem rauhen Betrieb unter Beaufschlagung von Schmutz, Wasser und dergl. funktionsfähig bleibt. Da der Stützmechanismus in seiner Reservestellung nicht über den Boden hinausragt, stört er auch nicht und kann keine Beschädigungen oder Verletzungen hervorrufen.

Auch bei einer Fahrt auf unebenem Gelände wird die schwenkbare Wand sicher in ihrer ausgeklappten, normalerweise horizontalen Stellung gehalten, wenn ein Verriegelungshaken vorgesehen ist, der in einen Verriegelungsbereich der Wand einfügbar ist und die Wand somit arretiert.

Geräusche und Verschleiß aufgrund der insbesondere metallischen Anlage der Wand an dem Stützmechanismus werden dadurch vermieden, daß zwischen beiden ein Dämpfungsteil z. B. aus Gummi vorgesehen ist.

Von den vielfältigen Möglichkeiten, den Stützmechanismus aus einer Stützstellung in eine Reservestellung und umgekehrt zu bringen, z. B. umzustecken, teleskopisch zu bewegen, etc. wird es als ein sehr einfacher Weg angesehen, den Stützmechanismus um eine im wesentlichen vertikale Achse an dem Boden oder einen diesen tragenden Rahmen horizontal schwenkbar zu lagern, was z. B. mittels einer einfachen Schraube oder einem Bolzen erfolgen kann.

Nachdem über den ausgestreckten Stützmechanismus erhebliche Biegemomente eingeleitet werden können, die aufgefangen werden müssen, ist es vorteilhaft, wenn ein Stützenhalter an dem Boden oder dem Rahmen vorgesehen ist, an dem sich der Stützmechanismus abstützen kann und der die zu übertragenden Kräfte auf eine größere Fläche verteilt.

Der Verriegelungshaken kann dann einfach ver- und entriegelt werden, wenn er mit einem Griff versehen ist. Hierbei ist zu beachten, daß zu lösende Verspannungen in der Riegelverbindung oder Kräfte zum Vorspannen der Riegelverbindung erheblich sein können.

Damit der Stützmechanismus nicht über seine Reservestellung hinaus und zumindest teilweise wieder in seine Stützstellung gelangt, ohne daß die Wand auf ihn aufgelegt würde, ist es sinnvoll, einen Schwenkanschlag vorzusehen, an dem der Stützmechanismus festgelegt wird.

Der Stützmechanismus kann dadurch auf einfache Weise unter dem Boden hervorgezogen werden, daß er mit einem Griff versehen wird.

In einem Fall, in dem die Wand auch über die ausgeklappte Stellung hinaus bewegbar ist und zumindest teilweise, z. B. mit seinem Verriegelungsabschnitt an dem Stützmechanismus in Kontakt kommt, können Geräusche und Verschleiß vermieden werden, wenn zwischen an der der Wand ausgesetzten Seite des Stützmechanismus ein Dämpfungsglied, z. B. aus Gummi vorgesehen ist.

Der Verriegelungshaken kann auf einfache Weise mit der Wand in Eingriff gebracht werden, wenn diese in dem Verriegelungsbereich als ein U-Profil ausgebildet ist, das an dem dem Verriegelungshaken zugelegenen Endbereich offen ist. Der Verriegelungshaken kann dann das offene Profil hintergreifen. Wenn darüber hinaus eine Aussparung vorgesehen ist, in der der Verriegelungshaken, zumindest dessen Nase, einsetzbar ist, steht der Verriegelungshaken bei aufgelegter und verriegelter Wand nicht über die Kante der Wand über.

In der Zeichnung ist ein nachfolgend näher beschriebenes Ausführungsbeispiel der Erfindung dargestellt. Es zeigt:
- Fig. 1: ein Transportfahrzeug in einer perspektivischen Ansicht von vorne links,
- Fig. 2: eine Ladeplattform des Transportfahrzeugs in einer perspektivischen Ansicht von hinten links,
- Fig. 3: eine Draufsicht auf das Transportfahrzeug nach Figur 1, wobei die durchgezogenen Linien die Ladeplattform in einem geschlossenen und die unterbrochenen Linien in einem geöffneten Zustand zeigen,
- Fig. 4: die Ladeplattform in einer Ansicht von unten und hinten mit einem Stützmechanismus zum Stützen einer rückwärtigen Wand in einer Reservestellung,
- Fig. 5: die Ladeplattform in einer Ansicht von hinten und unten, wobei der Stützmechanismus in einer Stützstellung geschwenkt ist,
- Fig. 6: ein vertikaler Schnitt durch den Stützmechanismus und einen Teil der auf ihm aufliegenden Wand,
- Fig. 7: ein Sicherungszusammenbau zwischen einer vorderen und einer seitlichen Wand, wobei die seitliche Wand ihre geschlossene Stellung einnimmt, und
- Fig. 8: den Sicherungszusammenbau aus Figur 7, wobei die seitliche Wand ihre geöffnete Stellung einnimmt.

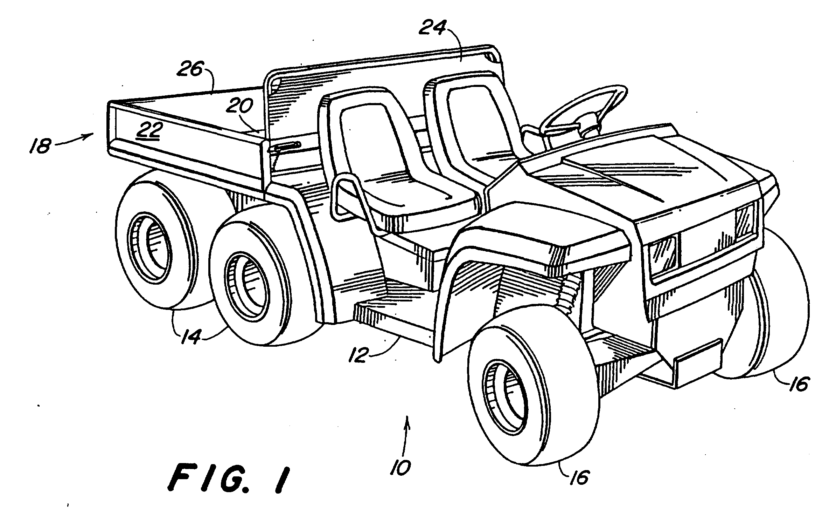

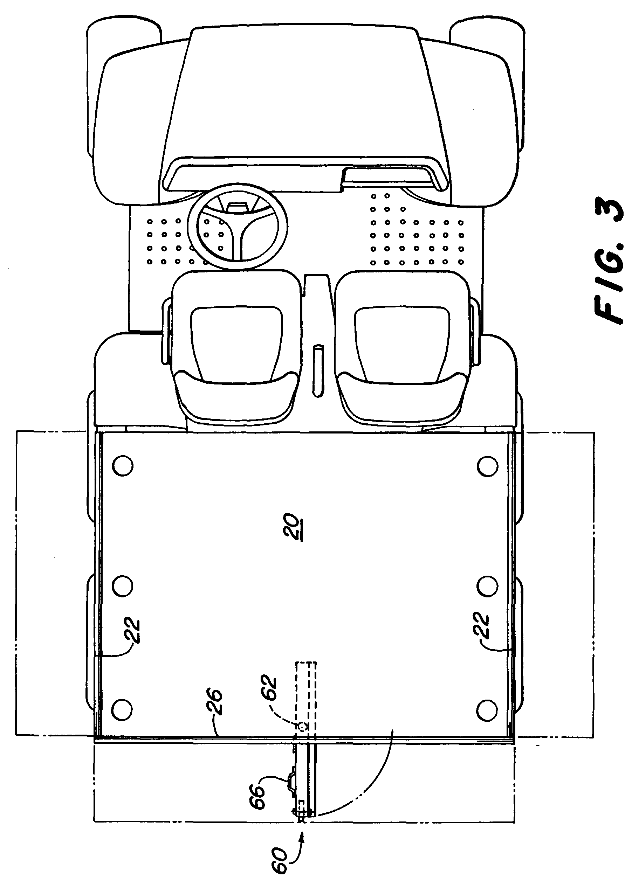

Figur 1 zeigt ein Transportfahrzeug 10 zum Befördern von Geräten und Werkzeugen mit einem Rahmen 12, der von vier angetriebenen Rädern 14 (in Figur 1 sind zwei davon gezeigt) und einem Paar lenkbarer vorderer Räder 16 getragen wird. Oberhalb der angetriebenen Räder 14 befindet sich eine Ladeplattform 18, die von dem Rahmen 12 getragen wird. Die Ladeplattform 18 enthält eine horizontale Platte oder Boden 20 und vertikale rechte und linke seitliche Wände 22, eine vordere Wand 24 und eine rückwärtige Wand 26. Die Wand 26 bildet die rückwärtige Wand der Ladeplattform 18 und ist in einer zu beschreibenden Art und Weise so angeordnet, daß sie die Öffnung zwischen den rückwärtigen Kanten des Bodens 20 und der seitlichen Wände 22 verschließen kann. Die seitlichen Wände 22 sind ebenfalls in einer zu beschreibenden Art und Weise derart angeordnet, daß sie um sich längs erstreckende waagrechte Achsen schwenken können. Auf diese Weise können die Wände 22 und die Wand 26 von einer geschlossenen, aufrechten Stellung in eine offene, zurückgekippte Stellung geschwenkt werden, in der sie tatsächlich zu einer Ausdehnung des Bodens 20 werden, und die Ladeplattform 18 kann auf diese Weise in eine flache Platte umgewandelt werden, wie dies in Figur 3 zu sehen ist.

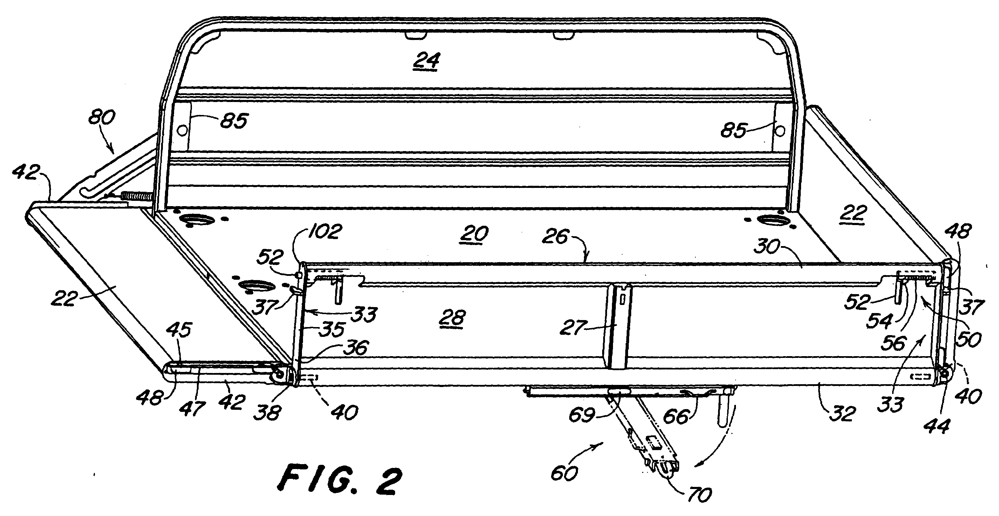

Gemäß Figur 2 enthält die Rückwand 26 - ausgehend von ihrer aufrechten Stellung - eine aufrechte Platte 28 mit einer umgebogenen oberen Kante 30 und einer umgebogenen unteren Kante 32. Ein Verriegelungsbereich 27 in der Form eines offenendigen U-Kanals ist an die aufrechte Platte 28 angeschweißt. Gegenüberliegende Enden 33 der rückwärtigen Wand 26 sind jeweils durch eine Endplatte 35 der Wand 26 bestimmt, die einen hauptsächlichen geraden Abschnitt 36 und einen Halter 37 zum Halten der seitlichen Wand 22 aufweist. Ein Halter 38 der Wand 26 ist an dem Boden 20 befestigt und nimmt einen Schwenkbolzen 40 auf, der sich des weiteren durch eine Öffnung in der Endplatte 35 der Wand 26 erstreckt. Der Schwenkbolzen 40 wird durch eine Schraubverbindung mit einer Mutter, die an die Innenseite der Endplatte 35 geschweißt ist, und die Anlage des Kopfes des Schwenkbolzens 40 an dem Halter 38 gehalten. Die Schwenkbolzen 40 an jedem Ende der Rückwand 26 stehen für eine im allgemeinen horizontale Achse, um die die Wand 26 schwenken kann. Die rückwärtige Wand 26 enthält auch eine Verriegelung 50 an jedem Ende 33, die eine L-förmige Stange 52 aufweist, die für eine axiale Bewegung eingeschlossen in einem Loch in einem Halter 54 geführt ist, der an der Platte 28 befestigt ist und sich von dieser nach hinten erstreckt, eine an die Innenseite der Endplatte 35 angeschweißte Büchse und eine ausgerichtete Öffnung in der Endplatte 35 der Wand 26. Eine Feder 56 ist zwischen dem Halter 54 und einem Bolzen gefangen, der sich durch eine Querbohrung in der Stange 52 derart erstreckt, daß die Stange 52 in eine Stellung vorgespannt wird, in der sich ein Ende der Stange 52 nach außen über die Endplatte 35 der Wand 26 erstreckt.

Wie es in den Figuren 2 bis 6 gezeigt ist, ist unter dem Boden 20 ein als Schwenkarm ausgebildeter Stützmechanismus 60 an den Rahmen 12 des Transportfahrzeugs 10 montiert. Der Stützmechanismus 60 ist mittels einer Schraube 62 an einem Halter 63 an den Rahmen 12 derart befestigt, daß der Stützmechanismus 60 um eine im allgemeinen vertikale Achse schwenken kann, und zwar zwischen einer Reservestellung, in der sich der Stützmechanismus 60 seitlich erstreckt und sich unterhalb des Bodens 20 befindet, und einer Stützstellung, in der sich der Stützmechanismus 60 längs erstreckt und sich ein Verriegelungsabschnitt 64 nach hinten über die rückwärtige Wand 26 hinaus erstreckt, wenn man von deren geschlossener Stellung ausgeht. Figur 3 zeigt den Stützmechanismus 60 in seiner Stützstellung und die diesbezüglichen Stellungen der rückwärtigen Wand 26 und der seitlichen Wände 20 in deren geschlossenen und offenen (dargestellt durch die unterbrochenen Linien) Stellungen. Der Stützmechanismus 60 ist vorzugsweise mit einem Griff 66 versehen, der von einer Bedienungsperson ergriffen werden kann, um den Stützmechanismus 60 zwischen seiner Reserve- und seiner Stützstellung zu schwenken. Der Halter 63 enthält einen Schwenkanschlag 68, der für eine Anlage an dem Stützmechanismus 60 sowohl in der Reserve- wie auch in der Stützstellung des Stützmechanismus 60 sorgt, so daß die Bedienungsperson den Stützmechanismus 60 auf einfache Weise zwischen diesen Stellungen bewegen kann.

Weil eine rückwärtige längliche Seite 101 des Stützmechanismus 60 eben oder nahezu eben mit dem rückwärtigen Ende des Transportfahrzeugs 10 ist, wenn sich der Stützmechanismus 60 in seiner Reservestellung befindet, kann die rückwärtige Wand 26 mit dem Stützmechanismus 60 in Berührung kommen, wenn die Wand 26 nach unten in eine vertikale Stellung oder darüber hinaus geschwenkt ist, wobei darüber hinaus bedeutet, über die geöffnete Stellung, in der sie von dem Stützmechanismus 60 gestützt wird, hinaus. Es mag daher wünschenswert sein, einen Dämpfungsblock 69, z. B. aus Gummi, auf die Seite 101 aufzubringen, um Stöße zu absorbieren und Geräusche zu mindern, die ansonsten entstehen würden, wenn die rückwärtige Wand 26 auf den Stützmechanismus 60 aufschlägt (insbesondere, wenn beide aus Metall bestehen). In einem solchen Fall wäre es wünschenswert, sicherzustellen, daß der Abstand, um den der Griff 66 von dem Stützmechanismus 60 absteht, geringer ist, als der Abstand, um den der Verriegelungsbereich 27 über die aufrechte Platte 28 übersteht, so daß der erste Kontakt zwischen der Wand 26 und dem Stützmechanismus 60 zwischen dem Dämpfungsblock 69 und dem Verriegelungsbereich 27 erfolgt, anstatt zwischen dem Griff 66 und der Platte 28.

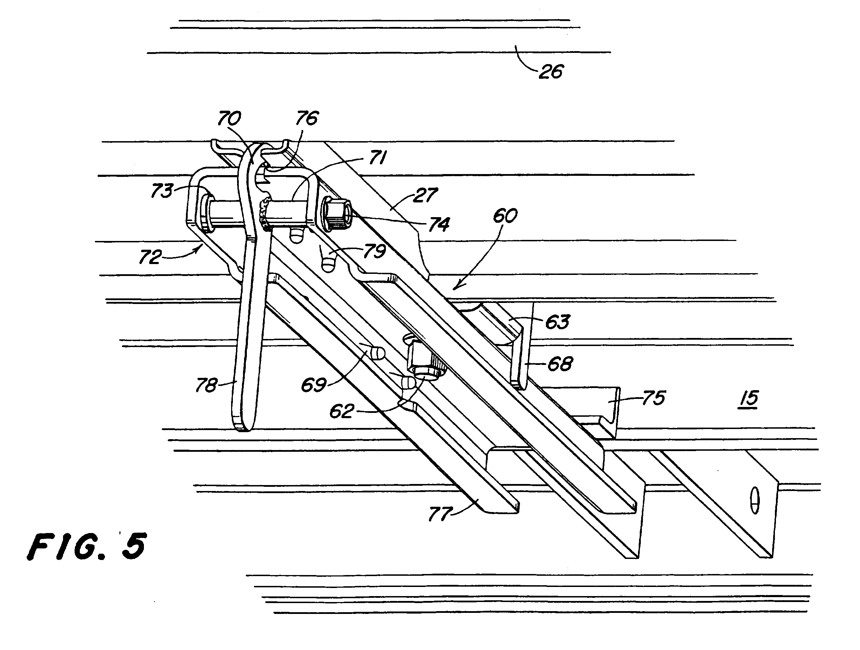

Ein Verriegelungshaken 70 ist an dem entfernten Ende 72 des Stützmechanismus 60 mittels einer Schraube 74 montiert, die als Drehachse für den Verriegelungshaken 70 dient. Der Verriegelungshaken 70 ist an eine Büchse 71 angeschweißt, die die Schraube 74 umgibt, so daß der Verriegelungshaken 70 in der gewünschten Stellung auf der Schraube 74 gehalten werden kann. Scheiben 73 aus Nylon sind an jedem Ende der Büchse 71 vorgesehen, um eine Reibung aufzubauen, die erforderlich ist, um ein gewünschtes Maß an Kraft zu fordern, um den Verriegelungshaken 70 zu schwenken. Ein Griff 78 erstreckt sich von dem Verriegelungshaken 70 weg, so daß eine Bedienungsperson den Verriegelungshaken 70 leichter drehen kann, um die Wand 26 in der geöffneten Stellung zu verriegeln. Ein Stützenhalter 75 ist an eine Schiene 15 des Rahmens 12 der Ladeplattform 18 einem nahen Ende 77 des Stützmechanismus 60 benachbart montiert, wenn sich der Stützmechanismus 60 in seiner Stützstellung (Fig. 5) befindet, um eine Stütze für das nahe Ende 77 des Stützmechanismus 60 zu bieten, um die Biegemomente zu reduzieren, die es von der Schraube 62 aus gesehen gibt, wenn der Stützmechanismus 60 durch die Wand 26 an seinem äußeren Ende 72 belastet wird.

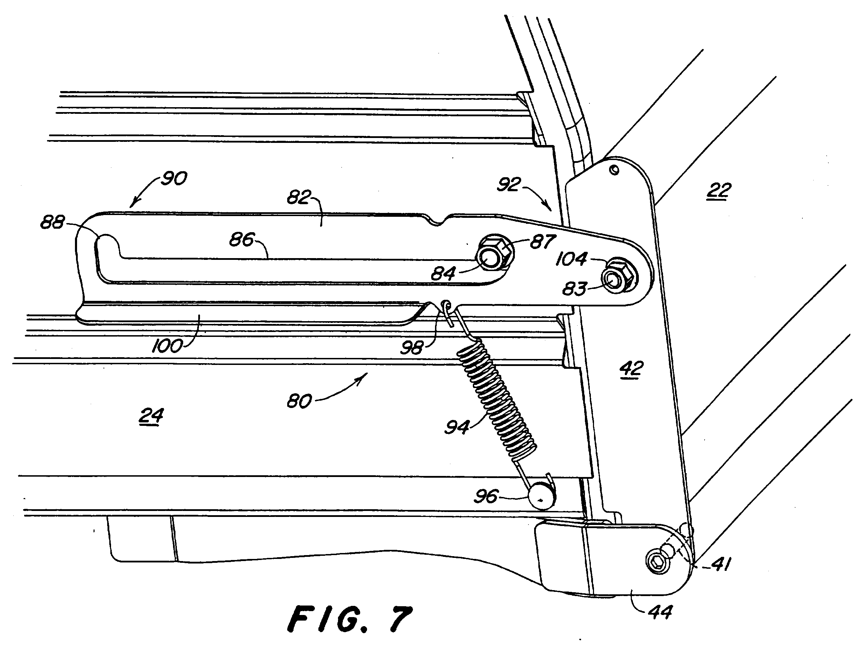

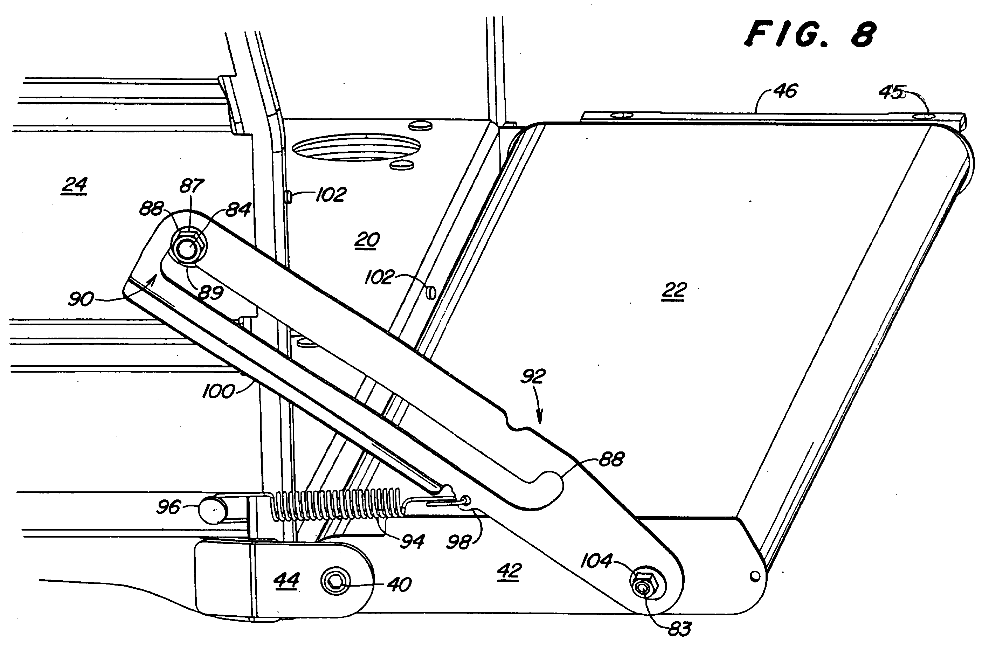

Wenn man nun auf die Figuren 7 und 8 schaut, kann man sehen, daß jede der seitlichen Wände 22 an gegenüberliegenden vorderen und rückwärtigen Enden Endplatten 42 aufweist, die Löcher zur Aufnahme des Schwenkbolzens 41 enthält, die ebenfalls von Haltern 44 für die Wände 22 aufgenommen werden, wobei die Halter 44 in bezug auf den Boden 20 festliegen. Die Schwenkbolzen 41 werden durch eine Schraubverbindung mit geschweißten Muttern in ihrer Stellung gehalten, wie die Schwenkbolzen 40 für die rückwärtige Wand 26. Die Schwenkbolzen 41 an jedem Ende der Wände 22 stellen in gleicher Weise ein Paar in Querrichtung voneinander beabstandeter und im allgemeinen horizontaler Achsen dar, um die die seitlichen Wände 22 schwenken können. Die Endplatten 42 an den rückwärtigen Enden der Wände 22 enthalten jeweils einen Halteflansch 46, der an diese angeschweißt ist. Wie dies in Figur 2 zu sehen ist, enthält der Halteflansch 46 einen Hauptabschnitt 47, der sich von der Endplatte 42 der seitlichen Wand 22 aus nach hinten erstreckt, und gebogene Abschnitte 48, die sich von dem Hauptabschnitt 47 aus nach hinten und außen erstrecken. Der Halteflansch 46 ist mit einem Loch 45 für einen Zweck versehen, der zu beschreiben ist.

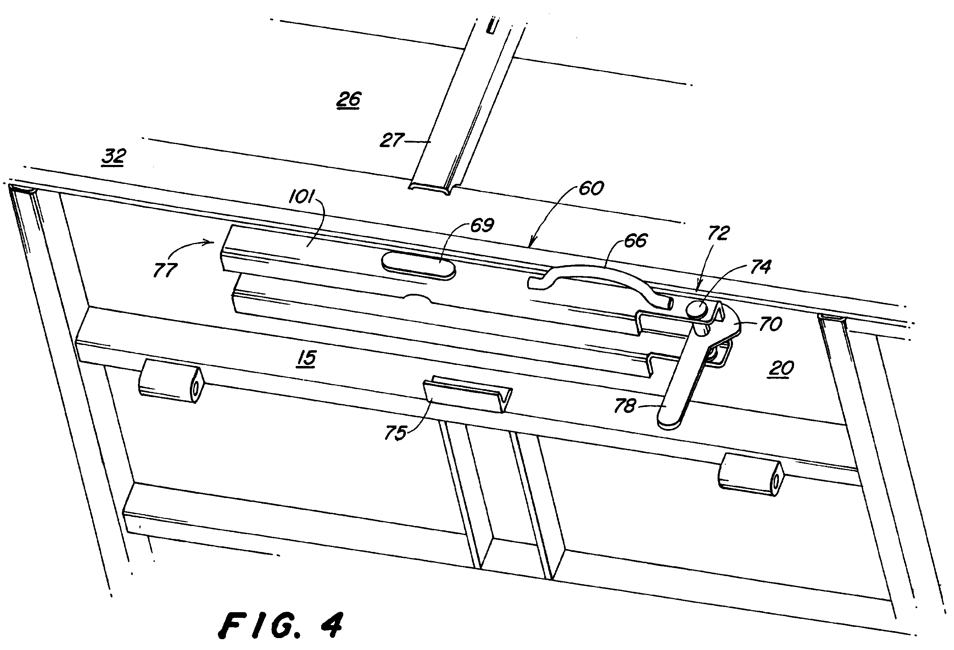

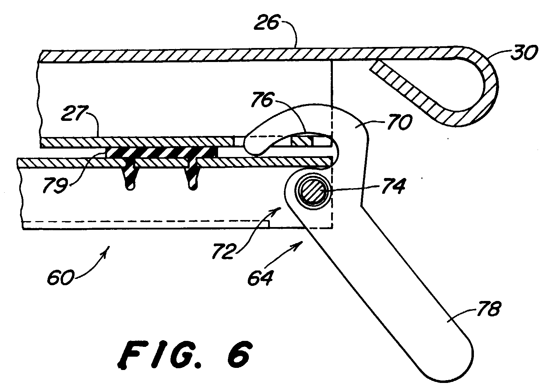

Gemäß den Figuren 2, 4 und 5 ist zu sehen, daß der Stützmechanismus 60 aus seiner Reservestellung (Fig. 4) in seine Stützstellung (Fig. 5) geschwenkt wird, so daß er sich nach hinten über die Wand 26 hinaus erstreckt - ausgehend von deren geschlossener Stellung - wenn es gewünscht ist, die Wand 26 zu öffnen und in der geöffneten Stellung zu verriegeln. Um die Verriegelung 50 zu lösen, können die L-förmigen Stangen 52 nach innen gleiten (gegen die Kraft der Feder), so daß die Enden der Stangen 52 von dem Eingriff mit den Löchern in den Halteflanschen 46 der Seitenwände 22 entfernt werden. Dann kann die Wand 26 nach unten geschwenkt werden. Gemäß den Figuren 5 bis 6 befindet sich der Verriegelungsabschnitt 27 in Anlage an der Oberseite des Stützmechanismus 60, wenn die rückwärtige Wand 26 eine im wesentlichen horizontale Ausrichtung (ihre geöffnete Stellung) einnimmt. Es ist somit ersichtlich, daß der Verriegelungsabschnitt 27 die Oberfläche der rückwärtigen Wand 26 darstellt, die direkt von dem Stützmechanismus 60 gestützt wird. Der Verriegelungsabschnitt 27 erstreckt sich von der aufrechten Platte 28 der Wand 26, um sicherzustellen, daß die Rückwand 26 an dem Boden 20 ausgerichtet ist, um eine Verlängerung von diesem zu bilden, wenn sich die rückwärtige Wand 26 in ihrer geöffneten Stellung befindet und von dem Stützmechanismus 60 gestützt wird. Die Wand 26 kann dann infolge einer Bewegung des Griffs 78, was eine Drehung des Verriegelungshakens 70 in das offene Ende des Verriegelungsabschnitts 27 bewirkt, in ihrer geöffneten Stellung gesichert werden. Der Verriegelungshaken 70 erfaßt dann die Unterseite des Verriegelungsabschnitts 27. Eine innere Kontur 76 des Verriegelungshakens 70 verläuft nicht mit einem konstanten Radius um die Schraube 74, so daß der Verriegelungshaken 70 als ein Nocken wirkt, der die Rückwand 26 - über ihren Verriegelungsabschnitt 27 - und den Stützmechanismus 60 mit zunehmender Kraft zusammenklemmt, wenn der Verriegelungshaken 70 geschwenkt wird. Um den Verriegelungshaken 70 zu entriegeln, kann er durch eine Öffnung in dem Verriegelungsabschnitt 27 geschwenkt werden und an der Oberseite des Stützmechanismus 60 (sh. Figur 6) anliegen. Vorzugsweise ist ein Dämpfungsteil 79, bestehend aus einem nachgiebigen Material, z. B. wie aus Gummi, zwischen dem Verriegelungsabschnitt 27 und dem Stützmechanismus 60 vorgesehen, der hier auf der Oberseite des Stützmechanismus 60 befestigt gezeigt ist, um Vibrationen zu verringern und dabei zu helfen, daß ein Rütteln in der Verbindung zwischen der rückwärtigen Wand 26 und dem Stützmechanismus 60 unterbleibt, während sich das Transportfahrzeug 10 über das Gelände bewegt, wobei das Rütteln sowohl als ein Zeichen für Geräusche als auch für Instabilität der Verbindung steht.

Um die rückwärtige Wand 26 zu schließen, wird sie mittels einer Drehung des Verriegelungshakens 70 von dem Stützmechanismus 60 getrennt. Wie man es auf der rechten Seite der Figur 2 sehen kann, kann die rückwärtige Wand 26 dann nach oben geschwenkt werden, bis die L-förmigen Stangen 52, die sich von dieser weg erstrecken, in Anlage an den gebogenen Abschnitten 48 der Halteflansche 46 der seitlichen Wände 22 gelangen. Eine weitere Bewegung der Wand 26 bewirkt, daß die Stangen 52 aufgrund der gebogenen Abschnitte 48 der Halteflansche 46 nach innen gleiten und nachgiebig belastet werden, wenn die Feder 56 zusammengedrückt wird. Wenn die rückwärtige Wand 26 ihre geschlossene, aufrechte Stellung erreicht, sind die Stangen 52 an den korrespondierenden Löchern 45 in den Seiten der Halteflansche 46 ausgerichtet. Die L-förmigen Stangen 52 sind durch die Kraft der Feder 56 vorgespannt, so daß die Enden der Stangen 52 in jedem der Löcher 45 in dem Halteflansch 46 untergebracht werden, was eine weitere Schwenkbewegung der Wand 26 verhindert. Zur gleichen Zeit wird eine nach innen gerichtete Bewegung des Halters 37 zum Halten der Wand 22 den Hauptabschnitt 47 des Halteflansches 46 erfassen, so daß die seitliche Wand 22 nicht nach außen schwenken kann. Die Anlage der Innenseite der seitlichen Wand 22 an der rückwärtigen Wand 26 und der Vorderwand 24, wie auch ein vorderer Sicherungszusammenbau 80 halten die Wand 22 davon ab, nach innen zu schwenken. Es ist daher ersichtlich, daß die seitlichen Wände 22 und die rückwärtige Wand 26 als eine gegenseitige Stütze ineinander greifen, wenn sie sich in ihrer geschlossenen, aufrechten Stellung befinden. Wenn die rückwärtige Wand 26 geschlossen ist, sollte der Stützmechanismus 60 in seine Reservestellung geschwenkt werden.

Die seitlichen Wände 22 werden durch den vorderen Sicherungszusammenbau 80 getragen und in ihrer offenen und geschlossenen Stellung an dem vorderen Ende jeder Seitenwand 22 (sh. Fig. 7 - 8) gehalten. Der vordere Sicherungszusammenbau 80 der linken Wand 22 ist in den Figuren 7 - 8 gezeigt. Der vordere Sicherungszusammenbau 80 der rechten Wand 22 ist von spiegelbildlicher Ausführung. Der vordere Sicherungszusammenbau 80 enthält jeweils eine Lasche 82, die an einem Ende der Endplatte 42 der Wand 22 mittels einer Schraube 83 und einer Mutter 104 schwenkbar gesichert ist. Die Schraube 83 wird von einer Büchse umgeben, die es ermöglicht, daß Kraft zwischen der Mutter 104 und der Endplatte 42 übertragen wird, so daß eine stramme Verbindung erhalten werden kann, ohne daß eine Schwenkbewegung der Lasche 82 um die Schraube 83 unterbunden würde. Ein als Schraube ausgebildetes Gleitelement 84 ist durch eine Öffnung in der vorderen Wand 24 und eine entsprechende Öffnung in einer in Figur 2 gezeigten Verstärkungsplatte 85 montiert, um die Stärke der vorderen Wand 24 wirksam zu erhöhen. Das Gleitelement 84 und eine Büchse, die das Gleitelement 84 umgibt, sind mittels einer Bundmutter 87 in einer als Schlitz ausgebildeten Gleitbahn 86 jeder Lasche 82 gefangen, so daß die Lasche 82 gegenüber dem Gleitelement 84 gleiten kann und das Gleitelement 84 der Gleitführung 86 folgt. Es mag wünschenswert sein, das Gleitelement 84 mit einer oder mehreren Scheiben 89 zu versehen, um als Lagerfläche für die Lasche 82 zu dienen. Die Scheiben 89 dienen dazu, die Lasche 82 auf Abstand zu der vorderen Wand 24 zu halten, um die Lasche 82 im wesentlichen parallel zu der Wand 24 zu halten, weil die Endplatte 42 vorzugsweise so gestaltet ist, daß sie die vordere Wand 24 überlappen, um der Ladeplattform 18 eine zusätzliche Festigkeit zu verleihen, wenn sich die seitlichen Wände 22 in ihrer geschlossenen aufrechten Stellung befinden. Die Scheiben 89 können aus einem Material mit geringer Reibung hergestellt sein, so daß die relative Gleitbewegung zwischen dem Gleitelement 84 und der Lasche 82 eine geringe Anstrengung erfordert. Die Gleitbahn 82 weist an den inneren und äußeren Enden 90, 92 jeder Gleitbahn 82 einen nach oben gebogenen Abschnitt oder Anschlag 88 auf, die als Arretierung wirken, von denen jeder einer offenen und einer geschlossenen Stellung der Seitenwand 22 zugeordnet ist. Die Öffnungen in der vorderen Wand 24 und der Verstärkungsplatte 85 sind vorzugsweise länglich ausgebildet, so daß das Gleitelement 84 zum Ausgleich von Fertigungstoleranzen in zugeordneten Teilen verstellt werden kann. Das Gleitelement 84 kann gelöst, die seitliche Wand 22 in strammer Anlage an der Außenseite der vorderen Wand 24 nach oben gebracht und das Gleitelement 84 wieder angezogen werden. Diese Einstellung stellt sicher, daß die geschlossene aufrechte Stellung der seitlichen Wand 22 in einer gewünschten Beziehung zwischen der seitlichen Wand 22 und der vorderen Wand 24 steht.

Eine Feder 94 ist zwischen einen Federhalter, wie etwa einen Niet 96, und einen Zungenabschnitt 98 der Lasche 82 eingefügt, wobei der Niet 96 an der vorderen Wand 24 angebracht gezeigt ist. Die Feder 94 spannt die Lasche 82 nach unten, so daß mangels einer von einer Bedienungsperson aufgebrachten entgegenwirkenden Kraft das Gleitelement 84 in einen der nach oben gewandten Anschläge 88 eingefügt wird, und die seitliche Wand 22 wird in der offenen oder geschlossenen Stellung gehalten, die dem betreffenden nach oben gewandten Anschlag 88, in dem das Gleitelement 84 sitzt, zugeordnet ist. Die Lasche 82 ist mit einem nach außen gebogenen Bereich 100 in der Art einer Lippe gezeigt, so daß eine Bedienungsperson die Lasche 82 leichter ergreifen kann, um sie gegen die Kraft der Feder 94 anzuheben.

Figur 7 zeigt den vorderen Sicherungszusammenbau 80 in Verbindung mit der linken Wand 22 des Transportfahrzeugs 10, wobei die Wand 22 in ihrer geschlossenen Stellung gezeigt ist. Das Gleitelement 84 ist in den nach oben gewandten Anschlag 88 der Lasche 82 an dem äußeren Ende 92 der Gleitbahn 82 eingesetzt, was eine Schwenkbewegung der seitlichen Wand 22 verhindert.

Eine Bedienungsperson kann die seitliche Wand 22 öffnen - wenn sich die rückwärtige Wand 26 in ihrer geöffneten Stellung befindet - indem sie die Lasche 82 anhebt, um die Kraft der Feder 94 zu überbieten und das Gleitelement 84 aus dem Eingriff mit dem nach oben gebogenen Anschlag 88 zu bringen, so daß die Lasche 82 der Länge ihrer Gleitbahn 86 entlanggleiten kann, wenn die Wand 22 nach unten schwenkt. Wenn die Wand 22 ihre geöffnete Stellung erreicht (gezeigt in Figur 8), trifft das Gleitelement 84 auf das innere Ende 90 der Gleitbahn 86, wo die Kraft der Feder 94 die Lasche 82 wiederum nach unten spannt, so daß das Gleitelement 84 in dem nach oben gedrehten Anschlag 88 an dem inneren Ende 90 der Gleitbahn 86 gefangen wird.

Die Seitenwand 22 kann dadurch geschlossen werden, daß die Lasche 82 angehoben wird, um das Gleitelement 84 aus dem nach oben gewandten Anschlag 88 an dem inneren Ende 90 der Gleitbahn 86 zu lösen. Die seitliche Wand 22 kann dann nach oben geschwenkt werden, bis sie ihre geschlossene Stellung erreicht, in der das Gleitelement 84 auf das äußere Ende 92 der Gleitbahn 86 trifft. Die Feder 94 wird dann die Lasche 82 nach unten ziehen, so daß sich das Gleitelement 84 in den nach oben gerichteten Anschlag 88 an dem äußeren Ende 92 der Gleitbahn 86 setzt.

Um die Ladeplattform 18 in einen flachen Boden zu verwandeln (Fig. 2), wird der Stützmechanismus 60 in seine Stützstellung geschwenkt und die rückwärtige Wand 26 wird in der zuvor beschriebenen Weise geöffnet und in ihrer offenen Stellung mit dem Stützmechanismus 60 verriegelt. Der vordere Sicherungszusammenbau 80 kann dann in der zuvor beschriebenen Weise gehandhabt werden, so daß die seitlichen Wände 22 in ihre geöffnete Stellung gebracht werden können und dabei den Umbau komplettieren. Die Ladeplattform 18 kann wieder zurückgebildet werden, indem zuerst die seitlichen Wände 22 und dann die rückwärtige Wand 26 in der hierin beschriebenen Weise geschlossen werden. Es kann wünschenswert sein, Puffer 102, wie z. B. Nylonstopfen, auf dem Umfang des Bodens 20 und zwischen der rückwärtigen und der vorderen Wand 26 und 24 anzubringen. Die Puffer 102 dienen der Verringerung der Geräusche, wenn sich die vordere und die rückwärtige Wand 22 und 26 in ihrer geschlossenen, aufrechten Stellung befinden.

Obwohl die Erfindung in bezug auf das dargestellte Ausführungsbeispiel beschrieben ist, werden Fachleute verstehen, daß die Erfindung in der vorbeschriebenen Form vorteilhaft sein kann, wenn sie für den Gebrauch in anderen Anwendungen geändert wird. Die vorliegende Erfindung sollte nicht durch die vorstehende Beschreibung sondern nur durch die folgenden Ansprüche eingeschränkt werden.

## Patentansprüche

1. Ladeplattform (18) eines Transportfahrzeugs (10) mit einem Boden (20), wenigstens einer schwenkbaren Wand (26) und einem Stützmechanismus (60) zum Halten der schwenkbaren Wand (26) in einer ausgeklappten Stellung, dadurch gekennzeichnet, daß der Stützmechanismus (60) eine erste Stellung unterhalb des Bodens (20) und eine zweite Stellung einnehmen kann, in der er sich über den Boden (20) hinaus erstreckt und in der die schwenkbare Wand (26) auf ihn auf legbar ist.

2. Ladeplattform nach Anspruch 1, dadurch gekennzeichnet, daß die schwenkbare Wand (26) einen Verriegelungsbereich (27) und der Stützmechanismus (60) einen Verriegelungshaken (70) aufweist, die in der aufliegenden Stellung der schwenkbaren Wand (26) miteinander in Eingriff bringbar sind.

3. Ladeplattform nach Anspruch 1 oder 2, dadurch gekennzeichnet, daß zwischen dem Stützmechanismus (60) und der schwenkbaren Wand (26), insbesondere deren Verriegelungsbereich (27), ein Dämpfungsteil (79) vorgesehen ist.

4. Ladeplattform nach einem oder mehreren der vorherigen Ansprüche, dadurch gekennzeichnet, daß der Stützmechanismus (60) um eine im wesentlichen vertikale Achse an dem Boden (20) oder einem den Boden (20) tragenden Rahmen (12) horizontal schwenkbar ist.

5. Ladeplattform nach einem oder mehreren der vorherigen Ansprüche, gekennzeichnet durch einen Stützenhalter (75) an dem Boden (20) oder einem den Boden (20) tragenden Rahmen (12), an dem der Stützmechanismus (60) in seiner stützenden Stellung zur Anlage bringbar ist.

6. Ladeplattform nach einem oder mehreren der vorherigen Ansprüche, dadurch gekennzeichnet, daß der Verriegelungshaken (70) mit einem Griff (78) versehen ist.

7. Ladeplattform nach einem oder mehreren der vorherigen Ansprüche, dadurch gekennzeichnet, daß wenigstens ein Schwenkanschlag (68) zur Begrenzung der Bewegung des Stützmechanismus (60) vorgesehen ist.

8. Ladeplattform nach einem oder mehreren der vorherigen Ansprüche, dadurch gekennzeichnet, daß an dem Stützmechanismus (60) ein Griff (66) vorgesehen ist.

9. Ladeplattform nach einem oder mehreren der vorherigen Ansprüche, dadurch gekennzeichnet, daß an einer Seite des Stützmechanismus (60), die der Wand (26) zugewandt ist, wenn sich der Stützmechanismus (60) unterhalb des Bodens (20) befindet, ein Dämpfungsblock (69) vorgesehen ist.

10. Ladeplattform nach einem oder mehreren der vorherigen Ansprüche, dadurch gekennzeichnet, daß der Verriegelungsbereich (27) als ein U-Profil ausgebildet ist, das an dem dem Verriegelungshaken (70) zugelegenen Endbereich offen ausgebildet und vorzugsweise mit einer Aussparung versehen ist.
